# EUROPEAN PATENT SPECIFICATION

(11) **EP 4 238 819 B1**
(45) Date of publication and mention of the grant of the patent: **03.12.2025**
(21) Application number: 23159367.4
(22) Date of filing: 01.03.2023
(51) Int. Cl.: B60N 2/75

(54) **IMPROVED ARMREST ARRANGEMENT FOR A WORK VEHICLE**
VERBESSERTE ARMLEHNENANORDNUNG FÜR EIN ARBEITSFAHRZEUG
AGENCEMENT D'ACCOUDOIR AMÉLIORÉ POUR VÉHICULE DE TRAVAIL

(30) Priority: 01.03.2022 IT 202200003788
(43) Date of publication of application: 06.09.2023
(73) Proprietor: CNH Industrial Italia S.p.A., 10156 Torino (IT)
(72) Inventor: RATZINGER, Philip, 4300 St. Valentin (AT)
(74) Representative: CNH Industrial IP Department

(56) References cited:
- EP-A1- 1 728 677
- EP-A1- 3 109 093
- FR-A1- 3 082 796

## Description

### TECHNICAL FIELD

The present invention concerns an armrest arrangement, in particular an armrest arrangement for a seat of a work vehicle.

The present invention finds its preferred, although not exclusive, application in an armrest arrangement for a cab of an agricultural vehicle such as a tractor. Reference will be made to this application by way of example below.

### BACKGROUND OF THE INVENTION

Agricultural vehicles such as tractors are provided with a driver seat that is designed to have an optimized comfort to allow the driver to control the vehicle in an ergonomic way.

One of the most common factor in designing driver seat is the armrest positioning. Clearly, due to difference in driver's height, the armrest should be adjustable in its position to allow fitting to driver's need.

In particular, different systems exist on the market as shown in FR3082796A1 and EP1728677A1. The most economic and robust have a limited degree of freedom, thereby not allowing a wide regulation of the position of the armrest. Conversely, the systems that allow a wide and versatile regulation of the armrest position with respect to the seat are very expensive and usually have a lower strength.

Therefore, the need is felt to provide an armrest for a seat of a work vehicle that allows a wide and versatile regulation of the armrest position and, at the same time, that is strong and cost-effective.

An aim of the present invention is to satisfy the above mentioned needs in a cost-effective and optimized manner.

### SUMMARY OF THE INVENTION

The aforementioned aim is reached by an armrest and a seat as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of an armrest arrangement according to the present invention;
- Figure 2 is another perspective view, with parts removed, of the armrest arrangement according to the present invention;
- Figure 3 is a perspective view, with parts removed, of a portion of the armrest arrangement according to the present invention; and
- Figures 4A to 4C are perspective views of different operative conditions of the armrest arrangement according to the present invention.

### DETAILED DESCRIPTION OF THE INVENTION

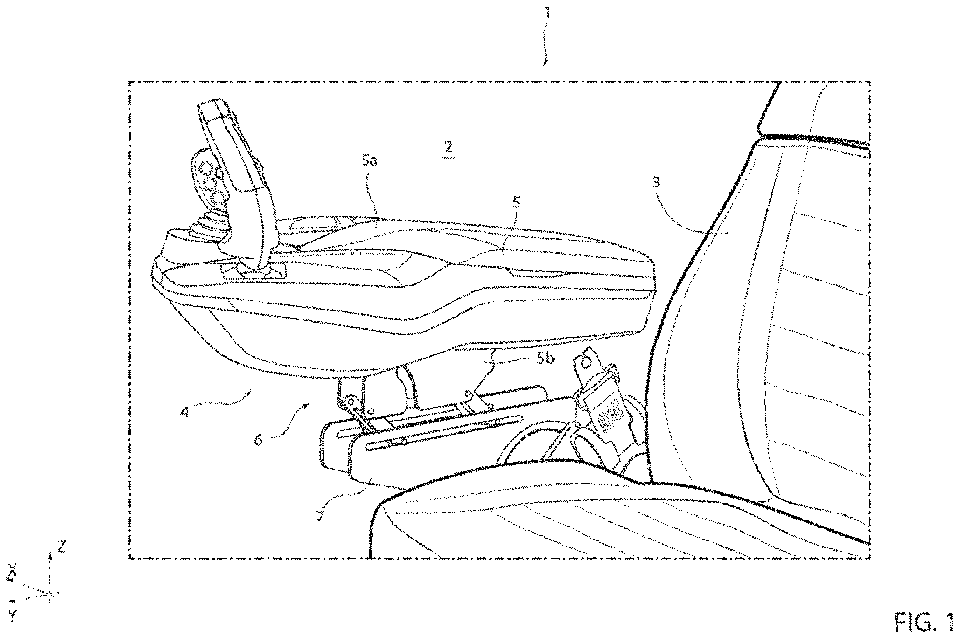

Figure 1 discloses a seat assembly 1 for a work vehicle (not shown in its entirety) such as a tractor. The seat assembly 1 is housed within a space 2, e.g. defined by a cab of the aforementioned vehicle, and comprises a seat 3 and an armrest arrangement 4 connected to the seat 3.

As per se known, the armrest arrangement 4 is placed laterally with respect to seat 3, i.e. defining as longitudinal direction the direction along a longitudinal axis Y of the vehicle the armrest is placed along a transversal direction defined by a transversal axis X. For sake of completeness, in order to define a reference system for the following description, the vertical direction is defined by a vertical axis Z.

The armrest arrangement 4 essentially comprises an armrest 5 and a fixed portion 7, the armrest 5 is carried in a movable manner with respect to the fixed portion 7 that is configured to be fixedly carried by seat 3.

In particular the armrest 5 comprises an armrest support portion 5a realized preferably in a soft material and/or shaped in ergonomic way and defining support for driver's arm and configured to provide connection for operational elements such as buttons or joysticks and a link portion 5b that is fixedly carried to and supports the armrest support portion 5a.

The link portion 5b is connected via a moving mechanism 6 to the seat, in particular the moving mechanism 6 movably connect the link portion 5b to the fixed portion 7.

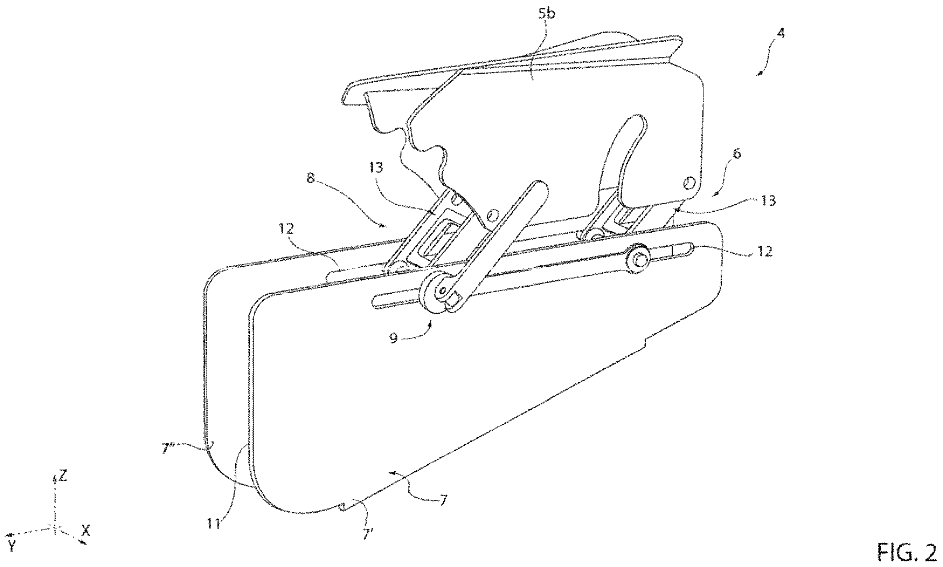

Making reference to figure 2, in detail, the moving mechanism 6 comprises a leverage 8 configured to allow motion of the armrest 5 along vertical axis Z and longitudinal axis Y and sliding means 9 configured to allow motion of the armrest 5 along longitudinal axis Y. The leverage 8 and the sliding means 9 are integrated one with the other as clear disclosed by the following description.

In detail, referring to fixed portion 7, it comprises a pair of walls 7', 7'' that are connected together and fixed to the seat 3 and spaced along transversal axis X. Accordingly, the define a space 11 extending transversally along such direction and opened vertically along vertical axis Z, in particular on the upper portion of the walls 7', 7'' with respect to ground of the cabin, i.e. towards armrest 5.

In greater detail, walls 7', 7'' are spaced along transversal axis X so that they allow house at least part of the armrest arrangement 4 in space 11, i.e. the link portion 5b and mechanism 6.

Each wall 7', 7'' furthermore defines a pair of grooves 12 extending along longitudinal axis Y direction and preferably faced one with respect to the other. Preferably, such grooves 12 are linear and horizontal, i.e. perpendicular to both transversal and vertical directions X, Z. More preferably, grooves 12 are equally extended along transversal direction of axis X.

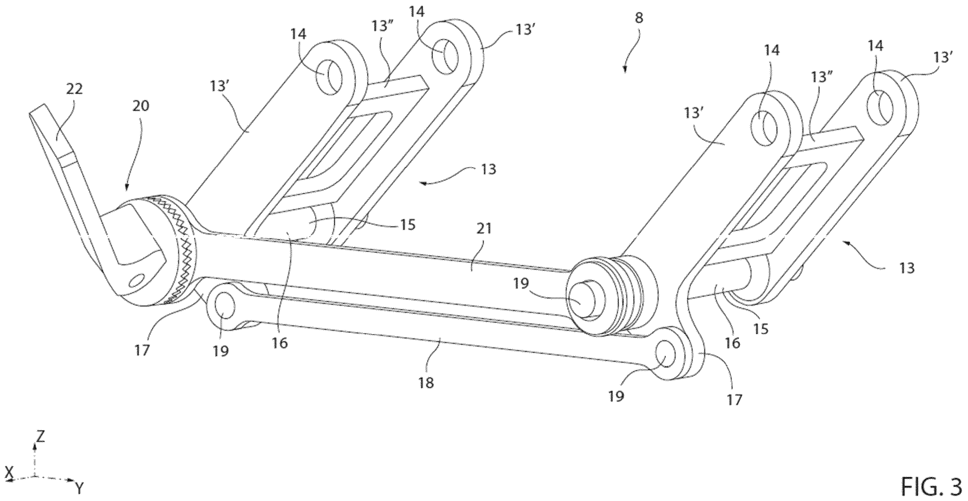

Referring to figure 3, leverage 8 comprises a pair of oscillating members 13 that are pivotally connected on their extremities between the fixed portion 7 and armrest 5. In detail, each oscillating member 13 comprises a pair of elongated side portions 13' and a central portion 13''; the elongated side portions 13' and the central portion 13'' are preferably connected together to define a "H" shaped cross-section.

In particular, each elongated shape portion 13' defines a first opening 14 and a second opening 15 respectively realized at terminal extremities of the elongated shape portion 13'.

The first openings 14 are configured to allow the connection of the elongated shape portion 13' with the armrest 5, e.g. via a pin (not shown) inserted in first opening 14 and in a respective opening in link portion 5b to define a hinge connection.

The second openings 15 are configured to allow the connection of the elongated shape portion 13' with the fixed portion 7, e.g. via a pin 16 inserted in second openings 15 and housed through grooves 12 to define a slidable hinge connection.

Both the first and the second openings 14, 15 allows pivotal connections allowing a rotation along an axis parallel to transversal axis X, thereby allowing a vertical and longitudinal movements of armrest 5 via oscillating members 13.

Accordingly, pin 16 extends along transversal axis X direction and is furthermore dimensioned to slide within grooves 12. According to the above, the sliding means 9, integrated into leverage 8, comprises grooves 12 and a portion of leverage 8, i.e. pin 16, sliding within these latter. In particular, pin 16 may slide between the longitudinal extremities of the grooves 12.

Central portion 13'' is preferably shaped so as to define an through opening in order to increase its torsional resistance to torques acting on the oscillating members 13.

The oscillating arms 13 are advantageously connected one to the other in order to make parallel their rotation about the respective connections realized with the armrest 5 and the fixing portion 7.

In particular, each oscillating member 13 defines a protrusion 17; the protrusions 17 of the two oscillating members 13 are connected together by a rod 18 that is preferably hinged on both extremities via hinge connections 19 to the protrusions 17.

In detail, protrusions 17 are realized integrally with one of the side elongated portions 13' of the oscillating members 13 and more preferably, such protrusions 17 are realized in proximity of second opening 15 of such side elongated portions 13'.

The moving mechanism 6 further comprises locking means 20 configured to selectively lock the leverage 8 and sliding means 9 in a selected relative position of the armrest 5 with respect to fixed portion 7.

In particular, locking means 20 comprise a compression rod 21 configured to assume a first operational position wherein it does not exert a force on mechanism 6 thereby letting it free to move and a second operational position wherein it exerts a force on mechanism 6 to lock the position of this latter. In particular, the compression rod exerts a compressive force between rotating members 13 and walls 7', 7'' to lock these latter in a frictional engagement.

In particular, compression rod 21 is configured to be connected to its longitudinal extremities t pins 15 of the rotating members 13 via hinge connections 19. In particular, pins 15 extends along transversal direction over grooves 12 and compression rod 21 is housed outside space 11, i.e. facing one of the walls 7', 7'' of the fixed portion 7.

The compressive force provided through compression rod 21 imparted by moving compression rod in transversal direction so that is contacts the wall 7' towards it is faced and forcing the contact between the compression rod and wall 7'.

In particular, locking means 20 comprises handling means 22 configured to provide the aforementioned compressive force, e.g. a locking handle, configured to move the compression rod 21 between the aforementioned operational positions and maintain in such position the rod 21 till the handling means are unlocked, i.e. they release the compression rod 21 from its coupling. The handling means 22 are preferably placed faced to the wall 7'' opposite to seat 3.

It is furthermore noticed that the link portion 5b is further comprises at least a groove 23 that is configured to allow the passage of a respective pin 16 during the movement of the armrest arrangement 4.

In particular, groove 23 has a curved shape that is function of the circular movement about pins 16 of the leverage 8, i.e. of rotating elements 13. The groove 23 is configured to limit the vertical motion of the assembly 5 within a preset minimum height in order to avoid contact of support portion 5a with fixing portion 3.

In greater detail, link portion 5b comprises a pair of walls parallel to fixed walls 7', 7'' and each defining a groove 23 configured to cooperate at contact with pin 16 on two sides thereof.

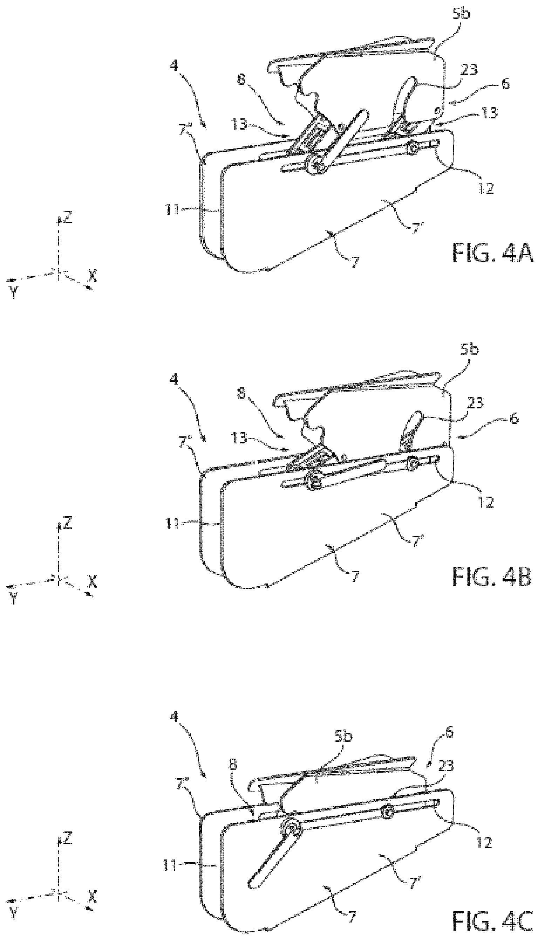

The operation of the embodiment of the invention as described above is the following, described making reference to figures 4A to 4C that discloses exemplarily operative positions of the armrest 5.

Figure 4A discloses a first operative position of the armrest arrangement 4 wherein the link portion 5b is totally extracted with respect to space 11, pin 16 are substantially equally spaced along longitudinal direction to groove 12 extremities and the rotating members 13 are inclined with respect to longitudinal axis Y so that the link portion 5b, and consequently armrest, is longitudinally positioned closer to seat 3.

Figure 4B discloses a second operative position of the armrest arrangement 4 wherein the link portion 5b is only partially extracted with respect to space 11, pin 16 are substantially equally spaced along longitudinal direction to groove 12 extremities and the rotating members 13 are inclined with respect to longitudinal axis Y so that the link portion 5b, and consequently armrest, is longitudinally positioned closer to seat 3.

Figure 4C discloses a third operative position of the armrest arrangement 4 wherein the link portion 5b is substantially sunk within space 11, the front pin 16 is in contact with front extremity of groove 12 and the rotating members 13 are inclined with respect to longitudinal axis Y so that the link portion 5b, and consequently armrest, is longitudinally positioned closer to seat 3.

In the second and third operative positions of figures 4B, 4C the rear pin 16 is inserted within the groove 23 that limits vertical motion of the armrest 5.

The passage between first, second, third or any other possible operative condition is achieved by acting as follows. Handling means 22 are releases, by hand, so that compressive road 21 is no more in contact with wall 7'. In this way the leverage 8 and sliding means 9 may move. Therefore, driver may move the armrest 5 in order to regulate the height along vertical axis X direction, and consequently to their rotation partially along longitudinal axis Y direction. Once the correct height is selected, the armrest 5 may be moved along longitudinal axis Y direction thanks to sliding of pins 16 within grooves 12. Once the longitudinal desired position is reached, the handling means 22 are charged so that the compression rod 21 is pushed against wall 7' for ocking mechanism 6.

In view of the foregoing, the advantages of the armrest and seat according to the invention are apparent.

The proposed armrest arrangement 4 can me moved in two directions independently in a simple manner, therefore allowing the user to fix the armrest 5 in a selected position.

Furthermore, the armrest arrangement 4 is particularly simple and compact since the leverage allowing vertical position adjustment and the sliding means are integrated one with the other.

Indeed, the proposed arrangement of leverage realized with two oscillating members connected one to the other and sliding in grooves is particularly robust. Such strength is furthermore increased by the shape of the oscillating members.

Accordingly, with respect to known system, the proposed armrest arrangement is cheaper and lighter.

Moreover, the disclosed locking means allows to lock and release the movement of armrest with a single hand and in a easy, but stable, way.

It is clear that modifications can be made to the described armrest as long as they remain within the scope of protection defined by the claims.

For example, the shape of the disclosed armrest 5, fixing portion 7 or seat 3 may vary. Similarly, the shape of rotating members 13 may be realized in different manner.

Grooves 12, 23 may have a different location and shape. Accordingly, sliding means 12 may be realized in an equivalent manner having the same function.

Moreover, the locking means 20 may be realized in any equivalent manner in order to lock mechanism 6 movement.

## Claims

1. Armrest arrangement (4) for a seat assembly (2) of a work vehicle, said armrest arrangement (4) comprising an armrest (5) and a fixed portion (7), the fixed portion (7) being configured to be rigidly fixed by said seat assembly (2), said armrest arrangement (4) comprising a mechanism (6) configured to connect in movable manner said armrest (5) with respect to said fixed portion (7),
wherein said mechanism (6) comprises a leverage (8) and sliding means (9), said leverage (8) being configured to allow regulation of the position of said armrest (5) with respect to said fixed portion (7) along a vertical direction axis (Z) and a longitudinal direction axis (Y) perpendicular to said vertical direction axis (Z), said sliding means (9) being configured to allow regulation of the position of said armrest (5) with respect to said fixed portion (7) along said longitudinal direction axis (Y), said sliding means (9) and said leverage (8) being integrated one in the other,
wherein said fixed portion (7) comprises a pair of walls (7', 7") spaced along a transversal direction axis (X) perpendicular to both said vertical and longitudinal axis (Z, Y), said walls (7', 7'') delimiting a space (11) along said transversal direction axis (X) dimensioned to house, at least partially, said mechanism (6) and said armrest (5), and
wherein said walls (7', 7'') each define a groove (12) extending along said longitudinal direction axis (Y) and, said sliding means (9) comprising said grooves (12) being configured to allow sliding of a portion of said leverage (8) within these latter, and
wherein said leverage (8) comprises a pair of oscillating members (13) and a pin (16), each oscillating member (13) defining first openings (14) configured to allow a pivotal connection to said armrest (5) and second openings (15) configured to allow a pivotal connection to said pin (16), said pin (16) being configured to move via said sliding means (9),
said armrest is **characterized in that** said pin (16) is housed within said grooves (12).

2. Armrest according to claim 1, wherein said pivotal connections allow a rotation about axis parallel to said transversal axis (X).

3. Armrest according to any of claims 1 or 2, wherein said oscillating members (13) each comprises a pair of side elongated portions (13') and a central portion (13'') connecting said side elongated portions (13'), said openings (14, 15) being realized in said side elongated portions (13).

4. Armrest according to any of claims 1 to 3, wherein oscillating members (13) are connected together so that their rotation is parallel.

5. Armrest according to claim 4, wherein each oscillating members (13) are connected via a rod (18) hinged via respective hinge connection (19) at its longitudinal extremities to an oscillating member (13).

6. Armrest according to any of the preceding claims, wherein said mechanism (6) comprises locking means (20) configured to lock the position of said mechanism (6) in a set position of said armrest (5) with respect to said fixed portion (7).

7. Armrest according to claim 6, wherein said locking means (20) comprise a compression rod (21) and handling means (22) configured to exert a force on said compression rod (21), said compression rod being configured to being moved between a first position wherein allows movement of said mechanism (6) and a second position wherein lock said mechanism (6) to said fixed portion (7) by frictional engagement.

8. Armrest according to claim 7, wherein said pins (16) each extends transversally over said grooves (12), said compression rod (21) being faced to one between said walls (7', 7'') and being hinged at its longitudinal extremities to said pins (16), said compression rod (21) being displaced to contact said one between said walls (7', 7'') in function of the force imparted by said handling means (21).

9. Armrest according to any of claims 1 to 8, wherein said armrest (5) comprises a support portion (5a) configured to provide support to a driver of said vehicle and a link portion (5b) configured to fixedly carry said support portion (5a) and being connected to oscillating members (13), said link portion (5b) comprising a pair of walls each defining a groove (23) configured to house one of said pins (16) in function of the position of said oscillating members (13), said groove (13) delimiting a minimum height position of said armrest (5) along said vertical direction axis (Z).

10. Armrest according to claim 9, wherein said groove (23) has an arcuate shape, said shape being function of the rotation of said oscillating members (13) about the respective pin (16).

11. Seat assembly (2) for a work vehicle comprising a seat (3) and at least an armrest arrangement (4) according to any of the preceding claims.

## Patentansprüche

1. Armlehnenanordnung (4) für eine Sitzanordnung (2) eines Arbeitsfahrzeugs, wobei die Armlehnenanordnung (4) eine Armlehne (5) und einen festen Abschnitt (7) aufweist, wobei der feste Abschnitt (7) dazu eingerichtet ist, starr durch die Sitzanordnung (2) befestigt zu werden, wobei die Armlehnenanordnung (4) einen Mechanismus (6) aufweist, der dazu eingerichtet ist, die Armlehne (5) beweglich mit dem festen Abschnitt (7) zu verbinden,
wobei der Mechanismus (6) einen Hebel (8) und Gleitelemente (9) aufweist, wobei der Hebel (8) dazu eingerichtet ist, eine Einstellung der Position der Armlehne (5) relativ zum festen Abschnitt (7) entlang einer vertikalen Achse (Z) und einer Längsachse (Y), die senkrecht zur vertikalen Achse (Z) verläuft, zu ermöglichen, wobei die Gleitelemente (9) dazu eingerichtet sind, eine Einstellung der Position der Armlehne (5) relativ zum festen Abschnitt (7) entlang der Längsachse (Y) zu ermöglichen, wobei die Gleitelemente (9) und der Hebel (8) ineinander integriert sind,
wobei der feste Abschnitt (7) ein Paar Wände (7', 7") aufweist, die entlang einer Querachse (X) beabstandet sind, die senkrecht sowohl zur vertikalen (Z) als auch zur Längsachse (Y) verläuft, wobei die Wände (7', 7") einen Raum (11) entlang der Querachse (X) begrenzen, der dazu bemessen ist, zumindest teilweise den Mechanismus (6) und die Armlehne (5) aufzunehmen, und
wobei die Wände (7', 7") jeweils eine Nut (12) definieren, die sich entlang der Längsachse (Y) erstreckt, und wobei die Gleitelemente (9) die Nuten (12) aufweisen, die dazu eingerichtet sind, ein Gleiten eines Abschnitts des Hebels (8) innerhalb derselben zu ermöglichen, und
wobei der Hebel (8) ein Paar von Schwenkelementen (13) und einen Bolzen (16) aufweist, wobei jedes Schwenkelement (13) erste Öffnungen (14), die dazu eingerichtet sind, eine schwenkbare Verbindung mit der Armlehne (5) zu ermöglichen, und zweite Öffnungen (15) definiert, die dazu eingerichtet sind, eine schwenkbare Verbindung mit dem Bolzen (16) zu ermöglichen, wobei der Bolzen (16) dazu eingerichtet ist, sich mittels der Gleitelemente (9) zu bewegen,
wobei die Armlehne **dadurch gekennzeichnet ist, dass** der Bolzen (16) innerhalb der Nuten (12) angeordnet ist.

2. Armlehne nach Anspruch 1, wobei die schwenkbaren Verbindungen eine Rotation um eine Achse parallel zur Querachse (X) ermöglichen.

3. Armlehne nach einem der Ansprüche 1 oder 2, wobei die Schwenkelemente (13) jeweils ein Paar von seitlichen länglichen Abschnitten (13') und einen Mittelabschnitt (13") aufweisen, der die seitlichen länglichen Abschnitte (13') verbindet, wobei die Öffnungen (14, 15) in den seitlichen länglichen Abschnitten (13') ausgebildet sind.

4. Armlehne nach einem der Ansprüche 1 bis 3, wobei die Schwenkelemente (13) miteinander verbunden sind, sodass ihre Rotation parallel verläuft.

5. Armlehne nach Anspruch 4, wobei die Schwenkelemente (13) jeweils über eine Stange (18) verbunden sind, die an ihren Längsenden über jeweilige Scharnierverbindungen (19) mit einem Schwenkelement (13) angelenkt ist.

6. Armlehne nach einem der vorhergehenden Ansprüche, wobei der Mechanismus (6) Verriegelungsmittel (20) aufweist, die dazu eingerichtet sind, die Position des Mechanismus (6) in einer eingestellten Position der Armlehne (5) relativ zum festen Abschnitt (7) zu verriegeln.

7. Armlehne nach Anspruch 6, wobei die Verriegelungsmittel (20) eine Druckstange (21) und Betätigungsmittel (22) aufweisen, die dazu eingerichtet sind, eine Kraft auf die Druckstange (21) auszuüben, wobei die Druckstange dazu eingerichtet ist, zwischen einer ersten Position, in der eine Bewegung des Mechanismus (6) ermöglicht ist, und einer zweiten Position, in der der Mechanismus (6) durch Reibschluss mit dem festen Abschnitt (7) verriegelt ist, bewegt zu werden.

8. Armlehne nach Anspruch 7, wobei die Bolzen (16) sich jeweils transversal über die Nuten (12) erstrecken, wobei die Druckstange (21) einer der Wände (7', 7") zugewandt ist und an ihren Längsenden mit den Bolzen (16) angelenkt ist, wobei die Druckstange (21) in Abhängigkeit von der durch die Betätigungsmittel (22) ausgeübten Kraft in Kontakt mit der einen der Wände (7', 7") gebracht wird.

9. Armlehne nach einem der Ansprüche 1 bis 8, wobei die Armlehne (5) einen Stützabschnitt (5a), der dazu eingerichtet ist, einem Fahrer des Fahrzeugs Halt zu geben, und einen Verbindungsabschnitt (5b) aufweist, der dazu eingerichtet ist, den Stützabschnitt (5a) fest zu tragen und mit den Schwenkelementen (13) verbunden zu sein, wobei der Verbindungsabschnitt (5b) ein Paar Wände aufweist, die jeweils eine Nut (23) definieren, die dazu eingerichtet ist, einen der Bolzen (16) in Abhängigkeit von der Position der Schwenkelemente (13) aufzunehmen, wobei die Nut (23) eine Minimalhöhenposition der Armlehne (5) entlang der vertikalen Achse (Z) begrenzt.

10. Armlehne nach Anspruch 9, wobei die Nut (23) eine bogenförmige Gestalt aufweist, wobei die Gestalt in Abhängigkeit von der Rotation der Schwenkelemente (13) um den jeweiligen Bolzen (16) ausgebildet ist.

11. Sitzanordnung (2) für ein Arbeitsfahrzeug, die einen Sitz (3) und zumindest eine Armlehnenanordnung (4) nach einem der vorhergehenden Ansprüche aufweist.

## Revendications

1. Dispositif d'accoudoir (4) pour un ensemble siège (2) d'un véhicule de travail, ledit dispositif d'accoudoir (4) comprenant un accoudoir (5) et une partie fixe (7), la partie fixe (7) étant configurée pour être fixée de manière rigide à l'aide dudit ensemble siège (2), ledit dispositif d'accoudoir (4) comprenant un mécanisme (6) configuré pour raccorder de manière mobile ledit accoudoir (5) par rapport à ladite partie fixe (7),
dans lequel ledit mécanisme (6) comprend un levier (8) et des moyens coulissants (9), ledit levier (8) étant configuré pour permettre le réglage de la position dudit accoudoir (5) par rapport à ladite partie fixe (7) le long d'un axe de direction verticale (Z) et d'un axe de direction longitudinale (Y) perpendiculaire audit axe de direction verticale (Z), lesdits moyens coulissants (9) étant configurés pour permettre le réglage de la position dudit accoudoir (5) par rapport à ladite partie fixe (7) le long dudit axe de direction longitudinale (Y), lesdits moyens coulissants (9) et ledit levier (8) s'emboîtant l'un dans l'autre,
dans lequel ladite partie fixe (7) comprend une paire de parois (7', 7") espacées le long d'un axe de direction transversale (X) perpendiculaire auxdits axes de direction verticale et de direction longitudinale (Z, Y), lesdites parois (7', 7") délimitant un espace (11) le long dudit axe de direction transversale (X) dimensionné pour loger, au moins partiellement, ledit mécanisme (6) et ledit accoudoir (5), et
dans lequel lesdites parois (7', 7") définissent chacune une rainure (12) s'étendant le long dudit axe de direction longitudinale (Y) et, lesdits moyens coulissants (9) comprenant lesdites rainures (12) étant configurés pour permettre le coulissement d'une partie dudit levier (8) à l'intérieur de ces dernières, et
dans lequel ledit levier (8) comprend une paire d'éléments oscillants (13) et une broche (16), chaque élément oscillant (13) définissant de premières ouvertures (14) configurées pour permettre un raccordement pivotant audit accoudoir (5) et de secondes ouvertures (15) configurées pour permettre un raccordement pivotant à ladite broche (16), ladite broche (16) étant configurée pour se déplacer par l'intermédiaire desdits moyens coulissants (9),
ledit accoudoir étant **caractérisé en ce que** ladite broche (16) est logée à l'intérieur desdites rainures (12).

2. Accoudoir selon la revendication 1, dans lequel lesdits raccordements pivotants permettent une rotation autour d'un axe parallèle audit axe transversal (X).

3. Accoudoir selon l'une quelconque des revendications 1 ou 2, dans lequel lesdits éléments oscillants (13) comprennent chacun une paire de parties latérales allongées (13') et une partie centrale (13") raccordant lesdites parties latérales allongées (13'), lesdites ouvertures (14, 15) étant réalisées dans lesdites parties latérales allongées (13).

4. Accoudoir selon l'une quelconque des revendications 1 à 3, dans lequel les éléments oscillants (13) sont raccordés entre eux de manière à ce que leur rotation soit parallèle.

5. Accoudoir selon la revendication 4, dans lequel chaque élément oscillant (13) est raccordé par l'intermédiaire d'une tige (18) articulée par le biais d'un raccordement à charnière respectif (19) au niveau de ses extrémités longitudinales à un élément oscillant (13).

6. Accoudoir selon l'une quelconque des revendications précédentes, dans lequel ledit mécanisme (6) comprend des moyens de verrouillage (20) configurés pour verrouiller la position dudit mécanisme (6) dans une position définie dudit accoudoir (5) par rapport à ladite partie fixe (7).

7. Accoudoir selon la revendication 6, dans lequel lesdits moyens de verrouillage (20) comprennent une tige de compression (21) et des moyens de préhension (22) configurés pour exercer une force sur ladite tige de compression (21), ladite tige de compression étant configurée pour être déplacée entre une première position dans laquelle elle permet le mouvement dudit mécanisme (6) et une seconde position dans laquelle elle verrouille ledit mécanisme (6) à ladite partie fixe (7) par le biais d'un engagement par friction.

8. Accoudoir selon la revendication 7, dans lequel lesdites broches (16) s'étendent chacune transversalement au-dessus desdites rainures (12), ladite tige de compression (21) étant tournée vers l'une desdites parois (7', 7") et étant articulée au niveau de ses extrémités longitudinales auxdites broches (16), ladite tige de compression (21) étant déplacée pour entrer en contact avec ladite paroi (7', 7") en fonction de la force exercée par ledit moyen de préhension (21).

9. Accoudoir selon l'une quelconque des revendications 1 à 8, dans lequel ledit accoudoir (5) comprend un élément de support (5a) configuré pour fournir un support à un conducteur dudit véhicule et une partie de liaison (5b) configurée pour supporter de manière fixe ledit élément de support (5a) et étant raccordée à des éléments oscillants (13), ladite partie de liaison (5b) comprenant une paire de parois définissant chacune une rainure (23) configurée pour loger l'une parmi lesdites broches (16) en fonction de la position desdits éléments oscillants (13), ladite rainure (13) délimitant une position de hauteur minimale dudit accoudoir (5) le long dudit axe de direction verticale (Z).

10. Accoudoir selon la revendication 9, dans lequel ladite rainure (22) a une forme arquée, ladite forme étant fonction de la rotation desdits éléments oscillants (13) autour de la broche respective (16).

11. Ensemble siège (2) pour un véhicule de travail comprenant un siège (3) et au moins un dispositif d'accoudoir (4) selon l'une quelconque des revendications précédentes.
